# EUROPÄISCHE PATENTSCHRIFT

(11) **EP 3 295 574 B1**
(45) Veröffentlichungstag und Bekanntmachung des Hinweises auf die Patenterteilung: **26.02.2020**
(21) Anmeldenummer: 16710674.9
(22) Anmeldetag: 14.03.2016
(51) Int. Cl.: H04B 3/54

(54) **VERFAHREN UND SYSTEM ZUM BETREIBEN EINER ELEKTRISCHEN SCHNITTSTELLE**
METHOD AND SYSTEM FOR OPERATING AN ELECTRICAL INTERFACE
PROCÉDÉ ET SYSTÈME POUR FAIRE FONCTIONNER UNE INTERFACE ÉLECTRIQUE

(30) Priorität: 12.05.2015 DE 102015005939
(43) Veröffentlichungstag der Anmeldung: 21.03.2018
(73) Patentinhaber: SEW-EURODRIVE GmbH & Co. KG, 76646 Bruchsal (DE)
(72) Erfinder: SIMON, Olaf, 76646 Bruchsal, Untergrombach (DE); HOFFMANN, Julian, 67729 Sippersfeld (DE); MEYROWITZ, Gunnar, 26123 Oldenburg (DE)
(86) Internationale Anmeldenummer: PCT/EP2016/000451
(87) Internationale Veröffentlichungsnummer: WO 2016/180508

(56) Entgegenhaltungen:
- DE-A1-102011 014 753
- DE-A1-102011 100 361
- DE-A1-102011 107 628

## Beschreibung

Die Erfindung betrifft ein Verfahren und ein System zum Betreiben einer elektrischen Schnittstelle.

Es ist allgemein bekannt, dass eine elektrische Schnittstelle Kommunikationsleitungen und Versorgungsleitungen umfassen kann.

Aus der DE 10 2011 014 753 A1 ist als nächstliegender Stand der Technik ein Verfahren zum Betreiben eines Antriebssystems bekannt

Aus der DE 10 2011 107 628 A1 ist eine Ladevorrichtung für Elektrofahrzeuge bekannt.

Aus der DE 10 2011 100 361 A1 ist ein Verfahren zum Betreiben eines Antriebssystems bekannt.

Der Erfindung liegt daher die Aufgabe zugrunde, eine höhere Sicherheit beim Betrieb von über eine Schnittstelle verbundenen Geräten zu erreichen.

Erfindungsgemäß wird die Aufgabe bei dem Verfahren nach den in Anspruch 1 angegebenen Merkmalen gelöst.

Von Vorteil ist dabei, dass zunächst nur eine geringe Versorgungsspannung bereit gestellt wird und somit auch bei Verpolung keine Gefahr für die elektronischen Bauelemente vorhanden ist. Außerdem ist bei fehlerhaften Bauteilen oder Verpolungsfehlern kein Lüften der Bremse ausführbar. Denn die der Schnittstelle zugeführte Spannung ist unterhalb des zum Betrieb der Bremse notwendigen Spannungswertes. Somit ist auch bei vollem Anlegen der Versorgungsspannung an die bremse kein Lüften ausgeführt, auch wenn die Versorgungsleitungen direkt an die Bremsspule geführt wären, beispielsweise mittels durchlegierter Schalter oder anderer Fehler. Die Bremse ist hier als Beispiel für beliebige andere, vorzugsweise sicherheitsrelevante Bauteile betrachtbar.

Daher ist die Sicherheit erhöht.

Bei einer vorteilhaften Ausgestaltung weist der Kommunikationskanal ein Paar von Leitungen für eine differentielle Datensignalübertragung auf
oder wird als Kommunikationskanal die Aufmodulation von Datensignalen auf die die Versorgungsspannung führenden Leitungen ausgeführt. Von Vorteil ist dabei, dass eine störarme Übertragung mittels der differentiellen Übertragung ausführbar ist oder alternativ eine wenig aufwendige, platzsparende Datenübertragung ausführbar ist.

Bei einer vorteilhaften Ausgestaltung führt der Kommunikationskanal von einem im ersten Elektrogerät angeordneten Mittel zu einem aus der an die Leitungen angelegten Versorgungsspannung gespeisten Mittel oder Weitspannungswandler, der das Mittel speist. Von Vorteil ist dabei, dass bei Ausfall der Versorgungsspannung keine Datenübertragung ausführbar ist und somit die Sicherheit erhöht ist. Denn nur wenn eine Versorgungsspannung in korrekter Weise anliegt, ist eine Datenübertragung ermöglicht.

Bei einer vorteilhaften Ausgestaltung weist das zweite Gerät ein Mittel zum Senden und/oder Empfangen, insbesondere ein Mittel zum Auswerten, von Daten auf,
wobei das Mittel aus der an die Leitungen angelegten Versorgungsspannung oder aus einem Weitspannungswandler, der aus der an die Leitungen angelegten Versorgungsspannung gespeist wird und das Mittel speist, versorgt wird. Von Vorteil ist dabei, dass bei Ausfall der Versorgungsspannung keine Datenauswertung oder Datendurchleitung ausgeführt wird und somit die Sicherheit erhöht ist.

Bei einer vorteilhaften Ausgestaltung erfolgt die Überprüfung der Datenübertragung durch Senden von Daten von einem der Geräte zum anderen der Geräte und durch nachfolgendes Rücksenden derselben Daten, wobei die rückgesendeten Daten mit den gesendeten Daten verglichen werden. Von Vorteil ist dabei, dass nur bei korrekt übermittelten Daten auf eine korrekte elektrische Verbindung und Polung der elektrischen Schnittstelle geschlossen werden kann. Die korrekte Datenübertragung beweist also sozusagen die korrekte Ausführung und/oder Betätigung der Schnittstelle.

Bei einer vorteilhaften Ausgestaltung wird vom Mittel des zweiten Geräts eine vom zweiten Gerät umfasste Bremse gesteuert. Von Vorteil ist dabei, dass bei Ausfall der Versorgungsspannung das Mittel ausfällt und somit die Bremse nicht ansteuerbar ist, also ein Lüften unterbleibt.

Wichtige Merkmale bei dem System, insbesondere zur Durchführung eines vorgenannten Verfahrens, sind, dass das System ein erstes Gerät, ein zweites Gerät und einen Kommunikationskanal aufweist, der das erste mit dem zweiten Gerät zum Datenaustausch verbindet,
wobei das erste Gerät ein erstes Kommunikationsmittel zum Senden und/oder Empfangen von Daten aufweist,
wobei das zweite Gerät ein zweites Kommunikationsmittel zum Senden und/oder Empfangen von Daten aufweist,
wobei Leitungen für Versorgungsspannung vom ersten Gerät zum zweiten Gerät vorhanden sind,
wobei im ersten Gerät eine steuerbare Spannungsquelle angeordnete ist, insbesondere eine Spannungsquelle mit wahlweise einer verschwindenden Spannung, einer ersten Spannung und einer zweiten Spannung,
wobei die steuerbare Spannungsquelle die Versorgungsspannung für das zweite Kommunikationsmittel über die Leitungen liefert, insbesondere indem ein Weitspannungsgleichrichter im zweiten Gerät aus den Leitungen versorgt ist und das zweite Kommunikationsmittel speist.

Von Vorteil ist dabei, dass eine hohe Sicherheit erreichbar ist, indem bei Ausfall oder Verpolung der Leitungen der Schnittstelle die Versorgungsspannung nicht mehr zur Verfügung steht und somit ein Lüften der Bremse verhindert ist oder ein vorgesehener Betrieb anderer sicherheitsrelevanter Bauteile, die von der Versorgungsspannung versorgt sind oder zumindest deren Ansteuerung aus der Versorgungsspannung versorgt ist, nicht mehr ausführbar ist. Somit ist die Sicherheit erhöht.

Bei einer vorteilhaften Ausgestaltung weist das erste Kommunikationsmittel ein Mittel zum Vergleichen der vom zweiten Kommunikationsmittel empfangenen Daten mit gespeicherten oder zuvor vom ersten Kommunikationsmittel ans zweite Kommunikationsmittel gesendeten Daten auf. Von Vorteil ist dabei, dass das Vergleichen die Sicherheit erhöht. Außerdem ist bei Ausfall des Mittels zum Vergleichen ebenfalls eine Erhöhung der Sicherheit erreichbar.

Bei einer vorteilhaften Ausgestaltung ist im zweiten Gerät eine Spule eines Elektromagneten, insbesondere einer elektromagnetisch betätigbaren Bremse, in Reihe mit einem steuerbaren Schalter angeordnet,
wobei die Reihenschaltung aus dem steuerbaren Schalter und der Spule aus den Leitungen elektrisch versorgt ist, also die von der steuerbaren Spannungsquelle gelieferte Versorgungsspannung an der Reihenschaltung anliegt. Von Vorteil ist dabei, dass somit die Sicherheit erhöht ist, weil fürs Lüften der Bremse funktionsrelevanten Bauteile nicht mehr versorgt sind, wenn eine Verpolung, also beispielsweise falsche Verdrahtung, der Schnittstelle ausgeführt ist.

Bei einer vorteilhaften Ausgestaltung ist das erste Gerät ein Umrichter und das zweite Gerät ein Elektromotor, insbesondere Bremsmotor,
wobei der Umrichter dem Motor mit elektrischer Leistung über Leistungsversorgungsleitungen, insbesondere für Starkstrom, versorgt. Von Vorteil ist dabei, dass die Bremsansteuersignale vom Umrichter über den Kommunikationskanal an den Motor übertragbar sind und somit der Kommunikationskanal nicht nur zur bei Inbetriebnahme anfänglichen Überprüfung der Schnittstellenverdrahtung sondern auch zum regulären Betrieb verwendbar ist.

Bei einer vorteilhaften Ausgestaltung wird die am steuerbaren Schalter abfallende Spannung erfasst und überwacht. Von Vorteil ist dabei, dass der Schalter überwacht wird und dabei mit einem jeweiligen Sollwert verglichen wird. Bei Ausfall ist somit ein Lüften der Bremse verhinderbar, indem nicht nur das Ansteuersignal für den Schalter sondern auch die Versorgungsspannung weggenommen oder zumindest auf den ersten Wert reduziert wird, so dass die Bremse nicht mehr lüftbar ist, da dann das von der Bremsspule erzeugte Magnetfeld eine zu schwache Kraft auf die Ankerscheibe der Bremse ausübt und somit die auf die Ankerscheibe gegengerichtet wirkende Federkraft überwiegt.

Bei einer vorteilhaften Ausgestaltung wird der durch den steuerbaren Schalter fließende elektrische Strom erfasst und überwacht. Von Vorteil ist dabei wiederum, dass der Schalter überwacht wird und dabei mit einem jeweiligen Sollwert verglichen wird. Bei Ausfall ist somit ein Lüften der Bremse verhinderbar, indem nicht nur das Ansteuersignal für den Schalter sondern auch die Versorgungsspannung weggenommen oder zumindest auf den ersten Wert reduziert wird, so dass die Bremse nicht mehr lüftbar ist, da dann das von der Bremsspule erzeugte Magnetfeld eine zu schwache Kraft auf die Ankerscheibe der Bremse ausübt und somit die auf die Ankerscheibe gegengerichtet wirkende Federkraft überwiegt.

Die Erfindung wird nun anhand von Abbildungen näher erläutert:

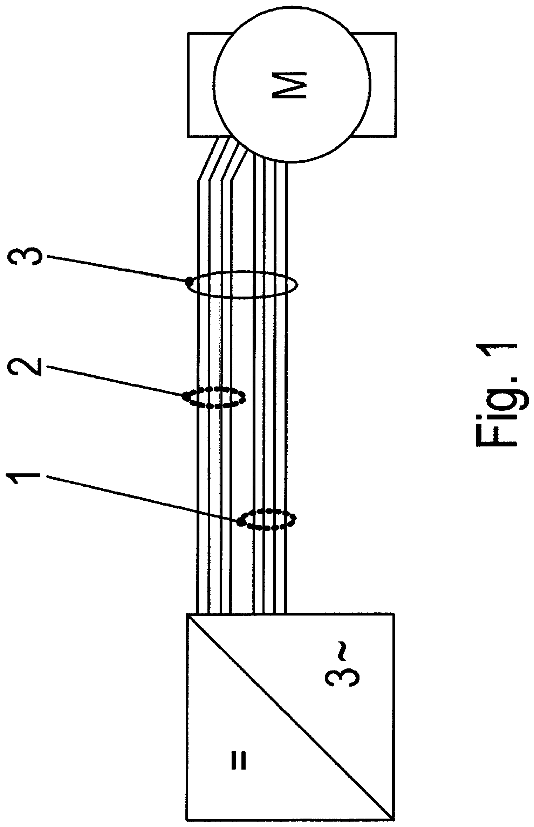

In der Figur 1 ist ein erfindungsgemäßes Antriebssystem mit Signalleitungen und Leistungsleitungen schematisch skizziert.

In der Figur 2 sind die Signalleitungen und die damit verbundenen, motorseitigen und umrichterseitigen elektronischen Schaltungen schematisch näher dargestellt.

Wie in den Figuren gezeigt, führen Leistungsleitungen von der Endstufe des Umrichters zum Elektromotor M und speisen somit dessen Statorwicklungen. Auf dieses Weise ist der als Drehstrommotor ausgeführte Elektromotor M vom Umrichter speisbar und seine Drehzahl mittels des Umrichters regelbar.

Außerdem weist der Elektromotor M eine elektromagnetisch betätigbare Bremse auf, die eine Bremsspule 26 umfasst, bei deren Bestromung die Bremse lüftbar ist, wenn die an der Bremsspule einen kritischen Spannungswert, beispielsweise einen Wert zwischen 12 Volt und 15 Volt, übersteigt.

Wenn nur eine Spannung an der Bremsspule 26 anliegt, die kleiner ist als dieser kritische Spannungswert, lüftet die Bremse noch nicht sondern verbleibt im eingefallenen Zustand, wodurch eine erhöhte Sicherheit erreichbar ist.

Die Bremse ist in Wirkverbindung mit der Rotorwelle des Motors M, so dass die Drehbewegung der Rotorwelle bei eingefallener Bremse abbremsbar ist.

Die Versorgungsleitung 24V/7.5V für die Bremse des Motors und die Masseleitung GND sind vom Umrichter aus zum Motor geführt.

Im Umrichter, also in der umrichterseitigen Signalelektronik 20, sind zwei steuerbare Schalter angeordnet, mit welchem ein Abtrennen der Versorgungsleitung 24V/7.5V von der Spannungsversorgung ausführbar ist. Bei Schließen des ersten Schalters ist die Versorgungsleitung 24V/7.5V mit dem positiven Pol einer Gleichspannungsquelle verbunden, welche einen ersten Gleichspannungswert aufweist, insbesondere 7,5 Volt. Bei Schließen des zweiten Schalters ist die Versorgungsleitung 24V/7.5V mit dem positiven Pol einer weiteren Gleichspannungsquelle verbunden, welche einen zweiten Gleichspannungswert, der größer ist als der erste Gleichspannungswert, aufweist, insbesondere 20 Volt.

Von der Versorgungsleitung 24V/7.5V ist die Bremsspule mit Strom versorgbar. Diese Stromzufuhr wird über den steuerbaren Schalter, insbesondere steuerbaren Halbleiterschalter, gesteuert.

Fehlerhafte elektrische Verbindungen werden durch die Erfindung erkennbar.

Erfindungsgemäß wird zunächst nur der erste Gleichspannungswert mittels der Versorgungsleitung 24V/7.5V und der Masseleitung GND der Bremsspule 26 zugeführt.

Die Bremse ist derart ausgeführt, dass dieser erste Gleichspannungswert derart niedrig ist, dass ein Lüften der Bremse vermieden ist. Erst ab einem kritischen Spannungswert, der zwischen dem ersten und dem zweite n Gleichspannungswert liegt, wird die Bremse gelüftet, insbesondere also auch bei Anlegen des zweiten Gleichspannungswertes. Somit ist also auch bei einer Verpolung oder sonstigen fehlerhaften Verschaltung und gleichzeitig fehlerhafterweise durchlegiertem steuerbaren Schalter 24 kein Lüften der Bremse bewirkt, solange der erste Gleichspannungswert wirksam ist.

Nach Zuführen des ersten Gleichspannungswerts wird die motorseitige Signalelektronik 21 mit elektrischer Energie aus der Versorgungsleitung 24V/7.5V und der Masseleitung GND versorgt, wobei diese Leitungen zur Versorgung eines Weitspannungswandlers 25 dienen, aus welchem ein Mittel zur Datenauswertung versorgt ist, das somit zum Datenaustausch über die Datenleitungen (Data+, Data-) bereit ist. Auf diese Weise ist eine Informationsübermitteldung von der motorseitigen Signalelektronik 21 an die umrichterseitige Signalelektronik 20 ermöglicht. Bei Verpolung oder entsprechender fehlerhafter Verschaltung ist eine solche Datenübermittlung schon allein deshalb nicht möglich, weil der Weitspanungswandler 25 selbst nicht korrekt versorgt ist und somit auch nicht das Mittel zur Datenauswertung 23. Der Weitspannungswandler 25 ermöglicht den Betrieb des Mittels 23 zur Datenauswertung unabhängig vom Wert der Versorgungsspannung, insbesondere also ist der Betrieb aufrechterhaltbar beim als Versorgungsspannung anliegenden ersten und zweiten Gleichspannungswert.

Die Datenleitungen (Data+, Data-) verbinden das Mittel zur Datenauswertung 23 mit dem Mittel zur Datenauswertung 22, welches in der umrichterseitigen Signalelektronik 20 angeordnet ist. Somit ist eine differentielle Datenübertragung ermöglicht und somit eine fehlerarme Datenübertragung.

Nach erfolgreicher Informationsübertragung wird der zweite Gleichspannungswert angelegt und somit eine zum Lüften der Bremse ausreichend hohe Versorgungsspannung der Bremsspule 26 zur Verfügung gestellt, wenn der steuerbare Schalter 24 geschlossen ist. Bei geöffnetem Schalter 24 ist keine Versorgung der Bremsspule ausführbar und somit auch kein Lüften der Bremse.

Über die Datenleitungen werden im späteren Betrieb die mittels eines Sensors erfassten Werte der Winkellage der Rotorwelle des Motors übertragen. Somit dienen die Datenleitungen zwar anfangs dem Verpolungsschutz, weil sie das Mittel 23 vor Verpolung schützen, aber später dienen sie der Übertragung der Winkelinformation.

Über den durch die Datenleitungen gebildeten Datenübertragungskanal sind auch vom Umrichter aus an die motorseitige Signalelektronik 21 Steuerinformationen übertragbar.

Nur wenn die Datenübertragung nach Einschalten und Anlegen des ersten Gleichspannungswerts erfolgreich ausgeführt und ausgewertet wurde, also auch das Mittel 22 zur Auswertung korrekte Funktion aufweist, ist ein Aufschalten der zweiten Gleichspannungswertes als Versorgungsspannung ausführbar und somit erst dann ein Lüften der Bremse veranlassbar. Also ist bei Fehlfunktion eines Teils ein Lüften der Bremse somit verhindert.

Das Mittel zur Datenauswertung 22 und das Mittel zur Datenauswertung 23 ist jeweils als Kommunikationsmittel zum Senden und/oder Empfangen von Daten ausgeführt. Wenn die Versorgungsspannung über die Versorgungsleitung 24V/7,5V nicht zur Verfügung steht, ist also auch kein Senden und/oder Empfangen von Daten beim zweiten Gerät ausführbar. Somit ist bei Ausfall eines der Mittel 22 und 23 kein Lüften der Bremse möglich und daher die Sicherheit erhöht.

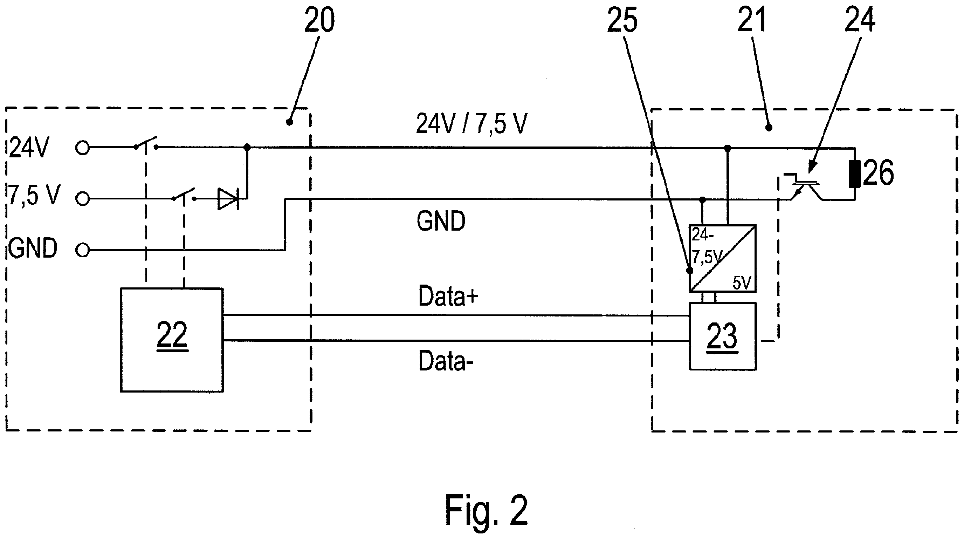

Die in Figur 2 dargestellten Schalter im ersten Gerät, also in dem die umrichterseitige Signalelektronik 21 umfassenden Gerät, wie Umrichter, fungieren zusammen mit den beiden Gleichspannungsquellen von 7,5 V und 24 V insgesamt als steuerbare Spannungsquelle. Die Ansteuerung dieser steuerbaren Spannungsquelle erfolgt durch das Mittel zur Datenauswertung 22. Denn nach erfolgreicher Datenüberprüfung werden die Schalter derart betätigt, dass die steuerbare Spannungsquelle ausgangsseitig die höhere Spannung zur Verfügung stellen, insbesondere also 24V. Beispielsweise wird die Überprüfung der Daten dadurch ausgeführt, dass zunächst erste Daten vom Mittel 22 gesendet werden über den Kommunikationskanal an das Mittel 23. Wenn danach dieselben Daten zurückgesendet werden an das Mittel 22, wobei dies vom Mittel 22 überprüft wird, kann die Freigabe erteilt werden für eine Erhöhung der Versorgungsspannung, so dass dann auch eine aus der Versorgungsspannung speisbare elektromagnetisch betätigbare Bremse lüftbar ist.

Bei einem weiteren erfindungsgemäßen Ausführungsbeispiel wird der vom steuerbaren Schalter 24 durchgeleitete Strom und/oder eine an ihm abfallende Spannung erfasst und zur Überwachung der Funktion des Schalters 24 verwendet.

Bei einem weiteren erfindungsgemäßen Ausführungsbeispiel wird die Datenübertragung anstatt auf separaten Datenleitungen mittels auf die Versorgungsleitung 24V/7,5V aufmodulierten Signalen ausgeführt. Somit ist ein geringer Verdrahtungsaufwand erreichbar und eine hohe Sicherheit gegen Verpolung.

### Bezugszeichenliste

1 Signalleitungen
2 Leistungsversorgungsleitungen
3 Hybridkabel
20 umrichterseitige Signalelektronik
21 motorseitige Signalelektronik
22 Mittel zur Datenauswertung
23 Mittel zur Datenauswertung
24 steuerbarer Schalter, insbesondere steuerbarer Halbleiterschalter
25 Weitspannungswandler
26 Bremsspule
M Elektromotor
GND Masseleitung
Data+ erste Datenleitung
Data- zweite Datenleitung
24V/7.5V Versorgungsleitung

## Patentansprüche

1. Verfahren zum Betreiben einer elektrischen Schnittstelle zwischen einem ersten und einem zweiten Elektrogerät, welche Leitungen (1) für Versorgungsspannung und einen Kommunikationskanal aufweist,
wobei das erste Elektrogerät ein Umrichter ist und das zweite Elektrogerät ein Bremsmotor, also Elektromotor mit Bremse, ist,
wobei der Umrichter den Elektromotor mit elektrischer Leistung über Leistungsversorgungsleitungen (2) versorgt,
wobei im zweiten Gerät eine Spule eines Elektromagneten einer elektromagnetisch betätigbaren Bremse in Reihe mit einem steuerbaren Schalter (24) angeordnet ist,
wobei die Reihenschaltung aus dem steuerbaren Schalter (24) und der Spule aus den Leitungen (1) elektrisch versorgt ist, also die von der steuerbaren Spannungsquelle gelieferte Versorgungsspannung an der Reihenschaltung anliegt,
**dadurch gekennzeichnet, dass**
in einem ersten Verfahrensschritt eine erste Versorgungsspannung an die Leitungen (1) angelegt wird, wobei durch die erste Versorgungsspannung ein Lüften der Bremse nicht bewirkbar ist
in einem zweiten Verfahrensschritt Daten über den Kommunikationskanal übertragen werden,
und in einem dritten Verfahrensschritt nach Überprüfung der Datenübertragung, also nach erfolgreicher Durchführung der Datenübertragung, eine zweite Versorgungsspannung an die Leitungen (1) angelegt wird, die und/oder deren Betrag größer ist als die erste Versorgungsspannung und/oder als deren Betrag, so dass durch die zweite Versorgungsspannung ein Lüften der Bremse bewirkbar ist, und mittels eines Sensors erfasste Werte der Winkellage der Rotorwelle des Motors über den Kommunikationskanal übertragen werden.

2. Verfahren nach Anspruch 1,
**dadurch gekennzeichnet, dass**
der Kommunikationskanal ein Paar von Leitungen (1) für eine differentielle Datensignalübertragung aufweist
oder dass als Kommunikationskanal die Aufmodulation von Datensignalen auf die die Versorgungsspannung führenden Leitungen (1) ausgeführt wird.

3. Verfahren nach mindestens einem der vorangegangenen Ansprüche,
**dadurch gekennzeichnet, dass**
der Kommunikationskanal von einem im ersten Elektrogerät angeordneten Mittel zu einem aus der an die Leitungen (1) angelegten Versorgungsspannung gespeisten Mittel oder Weitspannungswandler (25), der das Mittel speist, führt.

4. Verfahren nach mindestens einem der vorangegangenen Ansprüche,
**dadurch gekennzeichnet, dass**
das zweite Gerät ein Mittel zum Senden und/oder Empfangen von Daten aufweist,
wobei das Mittel aus der an die Leitungen (1) angelegten Versorgungsspannung oder aus einem Weitspannungswandler (25), der aus der an die Leitungen (1) angelegten Versorgungsspannung gespeist wird und das Mittel speist, versorgt wird.

5. Verfahren nach mindestens einem der vorangegangenen Ansprüche,
**dadurch gekennzeichnet, dass**
die Überprüfung der Datenübertragung durch Senden von Daten von einem der Geräte zum anderen der Geräte und durch nachfolgendes Rücksenden derselben Daten erfolgt, wobei die rückgesendeten Daten mit den gesendeten Daten verglichen werden.

6. Verfahren nach mindestens einem der vorangegangenen Ansprüche,
**dadurch gekennzeichnet, dass**
vom Mittel des zweiten Geräts eine vom zweiten Gerät umfasste Bremse gesteuert wird.

7. System zur Durchführung eines Verfahrens nach einem der Ansprüche 1 bis 6,
wobei das System ein erstes Gerät, ein zweites Gerät und einen Kommunikationskanal aufweist, der das erste mit dem zweiten Gerät zum Datenaustausch verbindet,
wobei das erste Gerät ein erstes Kommunikationsmittel zum Senden und/oder Empfangen von Daten aufweist,
wobei das zweite Gerät ein zweites Kommunikationsmittel zum Senden und/oder Empfangen von Daten aufweist,
wobei Leitungen (1) für Versorgungsspannung vom ersten Gerät zum zweiten Gerät vorhanden sind,
wobei im ersten Gerät eine steuerbare Spannungsquelle angeordnete ist,
wobei die steuerbare Spannungsquelle die Versorgungsspannung für das zweite Kommunikationsmittel über die Leitungen (1) liefert, indem ein Weitspannungsgleichrichter im zweiten Gerät aus den Leitungen (1) versorgt ist und das zweite Kommunikationsmittel speist,
**dadurch gekennzeichnet, dass**
das Kommunikationsmittel aus einem Weitspannungswandler gespeist wird, der aus der an die Leitungen (1) angelegten Versorgungsspannung gespeist wird..

8. System nach Anspruch 7,
**dadurch gekennzeichnet, dass**
das erste Kommunikationsmittel ein Mittel zum Vergleichen der vom zweiten Kommunikationsmittel empfangenen Daten mit gespeicherten oder zuvor vom ersten Kommunikationsmittel ans zweite Kommunikationsmittel gesendeten Daten aufweist.

9. System nach Anspruch 7 oder 8,
**dadurch gekennzeichnet, dass**
die am steuerbaren Schalter (24) abfallende Spannung erfasst wird und überwacht wird.

10. System nach Anspruch 7, 9 oder 8,
**dadurch gekennzeichnet, dass**
der durch den steuerbaren Schalter (24) fließende elektrische Strom erfasst wird und überwacht wird.

## Claims

1. Method for operating an electrical interface between a first and a second electrical device, said interface having lines (1) for a supply voltage and a communication channel, the first electrical device being a converter and the second electrical device being a brake motor, i.e. an electric motor comprising a brake,
the converter supplying electrical power to the electric motor by means of power supply lines (2),
a coil of an electromagnet of an electromagnetically operable brake being arranged in the second device in series with a controllable switch (24),
the series circuit of the controllable switch (24) and the coil being electrically powered from the lines (1), i.e. the supply voltage delivered by the controllable voltage source is applied to the series circuit,
**characterised in that**
in a first method step, a first supply voltage is applied to the lines (1), the first supply voltage not being able to bring about venting of the brake,
in a second method step, data are transmitted over the communication channel,
and in a third method step, after verifying the data transmission, i.e. after the data have been successfully transmitted, a second supply voltage is applied to the lines (1), which, and/or the magnitude of which, is greater than the first supply voltage and/or the magnitude thereof, such that the second supply voltage is able to bring about venting of the brake, and values detected by means of a sensor regarding the angular position of the rotor shaft of the motor are transmitted over the communication channel.

2. Method according to claim 1,
**characterised in that**
the communication channel has a pair of lines (1) for a differential data signal transmission, or **in that**, as the communication channel, data signals are modulated up to the lines (1) conducting the supply voltage.

3. Method according to at least one of the preceding claims,
**characterised in that**
the communication channel leads from a means arranged in the first electrical device to either a means fed from the supply voltage applied to the lines (1) or a wide-voltage transformer (25) that feeds the means.

4. Method according to at least one of the preceding claims,
**characterised in that**
the second device has a means for sending and/or receiving data,
the means being powered from either the supply voltage applied to the lines (1) or a wide-voltage transformer (25) that is fed from the supply voltage applied to the lines (1) and feeds the means.

5. Method according to at least one of the preceding claims,
**characterised in that**
the data transmission is verified by sending data from one of the devices to the other device and then sending the same data back, the sent-back data being compared with the sent data.

6. Method according to at least one of the preceding claims,
**characterised in that**
a brake comprised by the second device is controlled by the means of the second device.

7. System for carrying out a method according to any of claims 1 to 6,
the system having a first device, a second device and a communication channel, which connects the first device to the second device for data exchange,
the first device having a first communication means for sending and/or receiving data,
the second device having a second communication means for sending and/or receiving data, supply voltage lines (1) being provided from the first device to the second device,
a controllable voltage source being arranged in the first device,
the controllable voltage source delivering the supply voltage for the second communication means by means of the lines (1) in that a wide-voltage rectifier in the second device is powered from the lines (1) and feeds the second communication means,
**characterised in that**
the communication means are fed from a wide-voltage transformer, which is fed from the supply voltage applied to the lines (1).

8. System according to claim 7,
**characterised in that**
the first communication means has a means for comparing the data received by the second communication means with stored data or data sent previously by the first communication means to the second communication means.

9. System according to either claim 7 or claim 8,
**characterised in that**
the voltage dropping at the controllable switch (24) is detected and monitored.

10. System according to claim 7, 9 or 8,
**characterised in that**
the electrical current flowing through the controllable switch (24) is detected and monitored.

## Revendications

1. Procédé de fonctionnement d'une interface électrique entre un premier et un deuxième appareil électrique qui présente des lignes (1) pour la tension d'alimentation et un canal de communication,
dans lequel le premier appareil électrique est un variateur et le deuxième appareil électrique est un moteur-frein, c'est-à-dire un moteur électrique avec frein,
dans lequel le variateur alimente le moteur électrique en énergie électrique par des lignes d'alimentation en énergie (2),
dans lequel, dans le deuxième appareil, une bobine d'un électroaimant d'un frein à actionnement électromagnétique est disposée en série avec un commutateur commandable (24),
dans lequel le circuit série formé du commutateur commandable (24) et de la bobine est alimenté électriquement à partir des lignes (1), c'est-à-dire que la tension d'alimentation fournie par la source de tension commandable est appliquée au circuit série,
**caractérisé en ce que**
dans une première étape de procédé, une première tension d'alimentation est appliquée aux lignes (1), la première tension d'alimentation ne permettant pas de provoquer un desserrage du frein,
dans une deuxième étape de procédé, des données sont transmises par l'intermédiaire du canal de communication et,
dans une troisième étape de procédé, après vérification de la transmission de données, c'est-à-dire après exécution réussie de la transmission de données, une deuxième tension d'alimentation est appliquée aux lignes (1) qui et/ou dont la valeur est supérieure à la première tension d'alimentation et/ou à sa valeur, de sorte que la deuxième tension d'alimentation permet de provoquer un desserrage du frein, et des valeurs de la position angulaire de l'arbre de rotor du moteur détectées au moyen d'un capteur sont transmises par l'intermédiaire du canal de communication.

2. Procédé selon la revendication 1,
**caractérisé en ce que**
le canal de communication présente une paire de lignes (1) pour une transmission différentielle de signaux de données ou que
le canal de communication est réalisé par modulation de signaux de données sur les lignes (1) conduisant la tension d'alimentation.

3. Procédé selon au moins l'une des revendications précédentes,
**caractérisé en ce que**
le canal de communication conduit d'un moyen disposé dans le premier appareil électrique à un moyen, ou un convertisseur à large plage de tension (25) qui alimente le moyen, alimenté par la tension d'alimentation appliquée aux lignes (1).

4. Procédé selon au moins l'une des revendications précédentes,
**caractérisé en ce que**
le deuxième appareil présente un moyen pour envoyer et/ou recevoir des données,
le moyen étant alimenté par la tension d'alimentation appliquée aux lignes (1) ou par un convertisseur à large plage de tension (25) qui est alimenté par la tension d'alimentation appliquée aux lignes (1) et alimente le moyen.

5. Procédé selon au moins l'une des revendications précédentes,
**caractérisé en ce que**
la vérification de la transmission de données est effectuée en envoyant des données d'un des appareils à l'autre des appareils et en renvoyant ensuite les mêmes données, les données renvoyées étant comparées avec les données envoyées.

6. Procédé selon au moins l'une des revendications précédentes,
**caractérisé en ce**
**qu'**un frein inclus dans le deuxième appareil est commandé par le moyen du deuxième appareil.

7. Système pour mettre en œuvre un procédé selon l'une des revendications 1 à 6, lequel système présente un premier appareil, un deuxième appareil et un canal de communication qui relie le premier appareil au deuxième appareil pour l'échange de données,
dans lequel le premier appareil présente un premier moyen de communication pour envoyer et/ou recevoir des données,
dans lequel le deuxième appareil présente un deuxième moyen de communication pour envoyer et/ou recevoir des données,
dans lequel des lignes (1) pour la tension d'alimentation sont prévues entre le premier appareil et le deuxième appareil,
dans lequel une source de tension commandable est disposée dans le premier appareil,
dans lequel la source de tension commandable fournit la tension d'alimentation pour le deuxième moyen de communication par l'intermédiaire des lignes (1), un redresseur à large plage de tension étant alimenté dans le deuxième appareil à partir des lignes (1) et alimentant le deuxième moyen de communication,
**caractérisé en ce que**
le moyen de communication est alimenté par un convertisseur à large plage de tension qui est alimenté par la tension d'alimentation appliquée aux lignes (1).

8. Système selon la revendication 7,
**caractérisé en ce que**
le premier moyen de communication comprend un moyen pour comparer les données reçues du deuxième moyen de communication avec des données enregistrées ou des données précédemment envoyées par le premier moyen de communication au deuxième moyen de communication.

9. Système selon la revendication 7 ou 8,
**caractérisé en ce que**
la tension chutant au commutateur commandable (24) est détectée et surveillée.

10. Système selon la revendication 7, 9 ou 8,
**caractérisé en ce que**
le courant électrique circulant à travers le commutateur commandable (24) est détecté et surveillé.
